Europäisches Patentamt

European Patent Office

Office européen des brevets

(19)

(11) Publication number: **0 441 983 A1**

(12) **EUROPEAN PATENT APPLICATION**
published in accordance with Art.
158(3) EPC

(21) Application number: 90912964.5

(22) Date of filing: 04.09.90

(86) International application number:
PCT/JP90/01130

(87) International publication number:
WO 91/03780 (21.03.91 91/07)

(51) Int. Cl.⁵: **G05D 3/12, G05B 19/18,
B25J 9/00**

(30) Priority: 06.09.89 JP 229208/89

(43) Date of publication of application:
21.08.91 Bulletin 91/34

(84) Designated Contracting States:
DE GB SE

(71) Applicant: **FANUC LTD.**
**3580, Shibokusa Aza-Komamba Oshino-mura
Minamitsuru-gun, Yamanashi 401-05(JP)**

(72) Inventor: **TORII, Nobutoshi Room 308
Fuyohaitsu 65-4, Takakura-cho
Hachioji-shi Tokyo, 192(JP)**
Inventor: **NIHEI, Ryo Room 7-201 Fanuc
Manshonharimomi
3539-1, Shibokusa Oshino-mura,
Minamitsuru-gun
Yamanashi, 401-05(JP)**
Inventor: **KATO, Tetsuaki Room 8-101 Fanuc
Manshonharimomi
3511-1, Shibokusa Oshino-mura,
Minamitsuru-gun
Yamanashi, 401-05(JP)**

(74) Representative: **Billington, Lawrence Emlyn et
al
Haseltine Lake & Co Hazlitt House 28,
Southampton Buildings Chancery Lane
London WC2A 1AT(GB)**

(54) **METHOD OF CONTROLLING ROBOT.**

(57) A method of controlling a robot, by which the robot can be prevented from causing vibration arising from low rigidity thereof. A processor in a digital servo circuit cyclically performing loop processing of position, speed, and electric current computes an amount ($\epsilon$) and speed ($\dot{\epsilon}$) of distortion on the output side of a reduction gear corresponding to the rotational position and rotational speed on the input side of the reduction gear, respectively, after executing observer processing on the basis of a speed instruction computed by speed loop processing and a torque instruction computed by the speed loop processing in the previous cycle in order to achieve an observer function modeled on the basis of a state equation representing the mechanism of the robot (103). The processor computes a switching surface (S) in a sliding mode expressed by a function of the amount and speed

of distortion (104) and finds a current instruction value by adding a correction torque found by an operation expression selected according to a positive or negative value of the computation to the torque instruction value computed by the speed loop processing (105 ~ 108). When the motor is driven according to the current instruction value, the amount and speed of distorsion converge to zero, whereby vibration of the tip of the robot mechanism is prevented and the robot can quickly operate.

FIG.4

START

READ COMMAND POSITION VALUE FROM SHARED MEMORY ~100

READ POSITION FEEDBACK VALUE FROM FEEDBACK SIGNAL REGISTER ~101

POSITION AND SPEED LOOP PROCESSING ~102

DERIVE AND BY MEANS OF OBSERVER PROCESSING ~103

CALCULATE SWITCHING PLANE S ~104

105 $S \geqq 0$ NO

YES 106

$T = -\left(\dfrac{Jm}{C}\right)\left(\omega Cmax^2 + C^2\right)\cdot|\dot{\varepsilon}|$

107

$T = \left(\dfrac{Jm}{C}\right)\left(\omega Cmax^2 + C^2\right)\cdot|\dot{\varepsilon}|$

ADD CORRECTION TORQUE T TO TORQUE COMMAND VALUE DERIVED BY SPEED LOOP PROCESSING, AND DELIVER SAME TO CURRENT LOOP ~108

END

2

Technical Field

The present invention relates to a robot control method, and more particularly, to a robot control method capable of preventing vibration caused by inertia variation and action of spring elements of a robot.

Background Art

The servo system of a robot is typically designed to perform linear control, e.g., proportional-plus-integral control in accordance with a feedback signal from a position or speed detector mounted on a servomotor, to thereby driving the servomotor so as to control the position and orientation of the robot. In this type of conventional servo system, inertia variation caused by a change in the orientation of the robot is not taken into consideration, and therefore, the response characteristic of the servo system varies when a large inertia variation has occurred. Further, the robot mechanism section is typically constructed in a cantilever form, and includes a spring element, e.g., a speed reducer disposed between the robot mechanism section and the servomotor. Therefore, the stiffness and resonance frequency of the robot mechanism section will be low. On the other hand, in the conventional servo system, action of the spring element is not taken into consideration, and thus vibration tends to occur at the distal end (tool center point) of the robot mechanism section when positioning of the distal end is carried out. To obviate this, in the prior art, the servo gain is set to a small value, or a robot operation such as spot welding is started when a preset period of time has elapsed after the positioning control is completed, thereby preventing deterioration in the operation precision caused by vibration of the robot mechanism section. Therefore, according to the conventional method, there occurs a problem that the positioning period of time and hence the cycle time of the robot operation will be increased.

Disclosure of the Invention

An object of the present invention is to provide a robot control method for preventing vibration occurring in a robot by means of sliding mode control, to thereby achieve a high-speed robot operation.

In order to achieve the above-mentioned object, a robot control method, according to the present invention which is applied to a robot having a servomotor for driving a robot mechanism section, comprises the steps of: (a) detecting a torsion amount and torsion speed of a distal end of the robot mechanism section respectively corresponding to a rotational position and speed of the servomotor; (b) executing sliding mode control processing to derive a control output which causes the torsion amount and torsion speed to be made zero; and (c) driving the servomotor in accordance with the control output.

As described above, according to the present invention, since the servomotor is driven in accordance with the sliding mode control output which causes the torsion amount and torsion speed of the distal end of the robot mechanism section to be made zero, torsion occurring in the robot mechanism section can be rapidly compensated. Therefore, even if inertia of the robot has greatly varied due to, e.g., a change in the orientation of the robot, the response characteristic in the servo control will not be unsuitable, so that vibration occurring at the distal end of the robot mechanism section can be prevented or rapidly damped. As a result, the robot operation can be started immediately after positioning control of the robot mechanism section is completed, thereby making it possible to reduce the positioning time and hence the cycle time of the robot operation.

Brief Description of the Drawings

Fig. 1 is a schematic view showing a robot mechanism section to which one embodiment of the present invention is applied;
Fig. 2 is a block diagram showing a model constructing an observer for estimating the torsion amount and torsion speed;
Fig. 3 is a schematic block diagram showing a digital servo circuit for controlling the drive of the robot mechanism section; and
Fig. 4 is a flowchart showing a torque command deriving process executed by the servo circuit.

Best Mode of Carrying Out the Invention

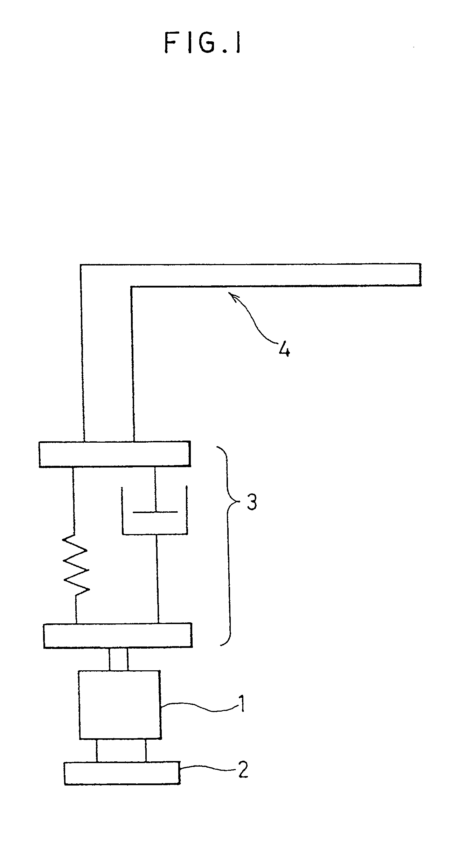

Referring to Fig. 1, a robot mechanism section to which one embodiment of the present invention is applied has a robot arm 4 operatively coupled to an output shaft of a servomotor 1 via a speed reducer 3, and a speed detector 2 is coupled to the motor output shaft. For simplifying the drawing, only those elements which relate to one of revolute joints of the robot arm are shown in Fig. 1. The speed reducer 3 serves as a spring element and a damper element of the robot mechanism section, so that torsion occurs in the rotation shaft of the speed reducer 3 when the speed reducer 3 is rotated, and friction occurs in the bearing portion of the rotation shaft. Hereinafter, the spring constant and coefficient of viscous friction of the speed reducer 3 will be indicated by symbols Kc and Bk.

Next, the principle of the method of this embodiment for preventing vibration of the distal end of the robot arm 4 by compensating for torsion occurring in the speed reducer 3 will be explained.

First, kinematic equations are derived by taking into account the torque balance established between the input side and output side (load side) of the speed reducer 3, as indicated by the following equations (1) and (2).

$$T = Jm \cdot \ddot{\theta}m + Bk(\dot{\theta}m - \dot{\theta}r) + Kc(\theta m - \theta r) \qquad ---(1)$$

$$0 = Jr \ddot{\theta}r + Br(\dot{\theta}r - \dot{\theta}m) + Kc(\theta r - \theta m) \qquad ---(2)$$

where symbols T and Jm respectively denote the input torque and shaft inertia (rotor inertia) of the servomotor 1, and Jr denotes a load inertia so converted as to correspond to that of the motor shaft. Symbols $\theta m$, $\dot{\theta}m$ and $\ddot{\theta}$ m respectively denote the rotational position, speed and acceleration of the speed reducer 3 on the input side of the speed reducer, and $\theta r$, $\dot{\theta}r$ and $\ddot{\theta}$ r respectively denote the rotational position, speed and acceleration of the speed reducer 3 on the output side (load side) of the speed reducer so converted as to correspond to those on the input side of the speed reducer.

From the equations (1) and (2), we obtain

$$T/Jm = \ddot{\varepsilon} + \{(Bk/Jm) + (Bk/Jr)\} \dot{\varepsilon}$$
$$+ \{(Kc/Jm) + (Kc/Jr)\} \varepsilon \qquad ---(3)$$

where $\epsilon$ (= $\theta m - \theta r$) and $\dot{\epsilon}$ (= $\dot{\theta}m - \dot{\theta}r$) denote the torsion amount and torsion speed on the output side (load) of the speed reducer, respectively corresponding to the rotational position and speed of the input side (servomotor 1) of the speed reducer 3.

Next, as shown by equations (4) and (5), the switching plane s in the sliding mode represented as a function of the torsion amount $\epsilon$ and torsion speed $\dot{\epsilon}$ and the Lyapunov function associated therewith will be considered.

$$s = \dot{\epsilon} + C\epsilon \qquad (4)$$
$$V = S^2/2 \qquad (5)$$

A symbol C in the equation (4) denotes a parameter which is experimentally determined. The Lyapunov function V ($\geq \overline{0}$) in the equation (5) monotonously decreases and converge at "0," if the differential value $\dot{V}$ thereof is negative. In other words, the switching plane s and hence the torsion amount $\epsilon$ and torsion speed $\dot{\epsilon}$ converge at "0". First, $\dot{V}$ is derived in order to obtain the condition for satisfying the above requirement.

By differentiating both sides of the equations (5) and (4), we obtain

$$\dot{V} = s \cdot \dot{s} \qquad (6)$$
$$\dot{s} = \ddot{\epsilon} + C\dot{\epsilon} \qquad (7)$$

Further, the following equation (8) is derived from the equations (3) and (7), and the following equation (9) is derived from the equations (8) and (4).

$\dot{s} = (T/Jm) + \{C - (Bk/Jm) - (Bk/Jr)\} \dot{\epsilon} -$
$\{(Kc/Jm) + (Kc/Jr)\} \epsilon \qquad (8)$
$\dot{s} = (T/Jm) + \{C + (\omega c^2 /C) - (\omega c^2 Bk/Kc)\} \dot{\epsilon}$

- $(\omega c^2/C)$     (9)

By substituting the equation (9) into the equation (6), we obtain

$$\dot{V} = -(\omega c^2 S^2/C) + [(T/Jm) + \{C + (\omega c^2/C) - \{\omega c\,^2 Bk/Kc)\}\} \dot{\epsilon}\,] s \quad (10)$$

where a parameter $\omega c$ denotes the square root of $\{(1/Jm) + (1/Jr)\} Kc$.

The first term $(-\omega c^2 s^2/C)$ in the equation (10) is always negative, and therefore, if an expression (11) or an expression (12) obtained by rewriting the expression (11) is satisfied, the expression of $\dot{V} < 0$ is satisfied.

$$[(T/Jm) - \{C + (\omega c^2/C) - (\omega c\,^2 Bk/Kc)\} \dot{\epsilon}] s < 0 \quad (11)$$
$$[T + (Jm/C)\{C^2 - \omega c^2 (1 - (Bk/Kc))\} \dot{\epsilon}] s < 0 \quad (12)$$

When $s \geq 0$ and if the following expression (13) or its approximation (14) is satisfied, expressions (11) and (12) are satisfied. Equation (14) is established when $1 >> Bk/Kc$. Symbol $\omega\ cmax$ in the equation indicates a possible maximum value of $\omega c$.

$$T < -(Jm/C)\{C^2 + \omega c^2 (1 - (Bk)/(Kc))\} \dot{\epsilon} \quad (13)$$
$$T = -(Jm/C)(C^2 + \omega\ cmax^2)\cdot |\dot{\epsilon}| \quad (14)$$

On the other hand, when, $s < 0$ and if the following equation (15) is established, expressions (11) and (12) are satisfied.

$$T = (Jm/C) \cdot (C^2 + \omega\ cmax\,^2)\cdot |\dot{\epsilon}| \quad (15)$$

As described above, a correction torque T for satisfying that $\dot{V} < 0$ can be obtained from equation (14) when $s \geq 0$, and from equation (15) when $s < 0$.

The method of this embodiment is embodied by means of a servo system which has an ordinary speed loop and a minor loop for executing the sliding mode control operation, so that a correction torque obtained in the minor loop is added to an ordinary torque command obtained in the ordinary speed loop, to thereby obtain a torque command. When the servomotor is operated in accordance with this torque command, the switching plane s converges at "0". At this time, the torsion amount $\epsilon$ and torsion speed $\dot{\epsilon}$ converge at "0", that is, vibration of the distal end of the robot mechanism section is prevented or rapidly attenuated. Further, as is clearly seen from equation (1), since the relationship of $\epsilon = \dot{\epsilon} = 0$ is fulfilled, the output torque of the servomotor depends only on the rotor inertia Jm which is kept constant with elapse of time. In other words, variation in the inertia can be compensated.

In this embodiment, to detect the torsion amount $\epsilon$ and torsion speed $\dot{\epsilon}$, an observer for estimating these parameters is used. In order to decide a model which constitutes the observer, the state equation associated with the robot mechanism section shown in Fig. 1 will be derived.

First, the following equations (16) and (17) are derived from the equations (3) and (1), respectively.

$$\ddot{\epsilon} = -\{(Bk/Jm) + (Bk/Jr)\} \dot{\epsilon} - \{(Kc/Jm) + (Kc/Jr)\} \epsilon + (T/Jm) \quad ---(16)$$

$$\ddot{\theta}m = -(Bk/Jm)) \dot{\epsilon} - (Kc/Jm) \epsilon + (T/Jm) \quad ---(17)$$

Assuming that $\dot{\epsilon} = x1$, $\epsilon = x2$ and $\dot{\theta}m = x3$, the following equations (18) and (20) are obtained from the equations (16) and (17), respectively, and the following equation (19) is established.

$\dot{x}1 = -\{(Bk/Jm) + (Bk/Jr)\}\, x1 +$
$\{(Kc/Jm) + (Kc/Jr)\}\, x2 + (T/Jm) \qquad (18)$
$\dot{x}2 = x1 \qquad (19)$
$\dot{x}3 = -(Bk/Jm)\, x1 - (Kc/Jm)\, x2 + (T/Jm) \qquad (20)$

From equations (18) to (20), we obtain

$$\frac{d}{dt}\begin{bmatrix} x1 \\ x2 \\ x3 \end{bmatrix} = \begin{bmatrix} 1/(Jm) \\ 0 \\ 1/(Jm) \end{bmatrix}\cdot T +$$

$$\begin{bmatrix} -\{(Bk/Jm)+(Bk/Jr)\} & -\{(Kc/Jm)+(Kc/Jr)\} & 0 \\ 1 & 0 & 0 \\ -(Bk/Jm) & -(Kc/Jm) & 0 \end{bmatrix}\begin{bmatrix} x1 \\ x2 \\ x3 \end{bmatrix}.$$

$$---(21)$$

Further, by simplifying equation (21), the state equation represented by the following equation (22) can be derived.

$$dx/dt = Ax - KDx + KDx + BT$$
$$= (A - KD)x + Ky + BT \qquad (22)$$

where

$$\mathbf{x} = \begin{bmatrix} x1 \\ x2 \\ x3 \end{bmatrix}, \quad y = [0,0,0]\begin{bmatrix} x1 \\ x2 \\ x3 \end{bmatrix},$$

A, B and D represent matrices, and K denotes a constant which is selected in a manner making A - KD stable.

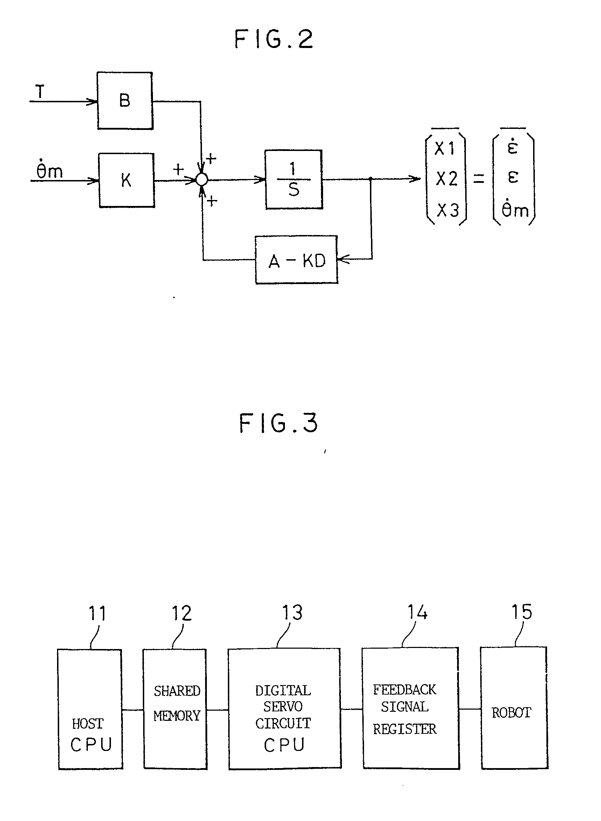

In view of the equation (22), the model which constitutes the observer can be represented by the following equation (23). in other words, the model can be represented by the block diagram shown in Fig. 2.

$$\frac{d\hat{x}}{dt} = (A - KD)\hat{x} + Ky + BT \qquad ---(23)$$

where

$$\hat{x}\ (= \begin{bmatrix} x1 \\ x2 \\ x3 \end{bmatrix})$$

represents an estimated value of x, and satisfies the following relation.

$$\begin{bmatrix} \overline{x1} \\ x2 \\ x3 \end{bmatrix} = \begin{bmatrix} x1 \\ x2 \\ x3 \end{bmatrix} = \begin{bmatrix} \dot{\varepsilon} \\ \varepsilon \\ \dot{\theta}\,m \end{bmatrix}$$

Namely, the torsion amount $\varepsilon$ and torsion speed $\dot{\varepsilon}$ can be estimated by means of the observer shown in Fig. 2.

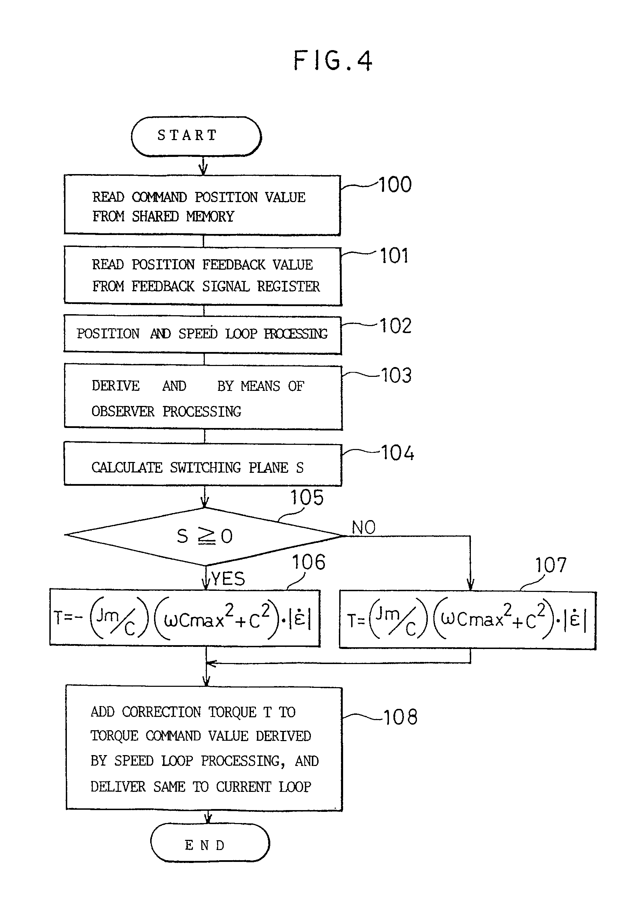

With reference to Fig. 3, a digital servo (software servo) system for embodying the sliding mode control method will be explained.

The digital servo system comprises a digital signal processor (not shown), and a digital servo circuit 13 which accommodates therein a memory (not shown) for storing preset values for various constants, mentioned later. The servo circuit 13 is designed to execute or achieve, by means of software processing, the sliding mode control, the function of the observer, and control of the position, speed and current of servomotors (corresponding to servomotors in Fig. 1) associated with individual axes of a robot 15, which is provided with the robot mechanism section shown in Fig. 1.

Further, the servo system comprises a shared memory (RAM) 12 accessible by a processor (hereinafter referred to as a first processor) of the servo circuit 13 and by a processor (hereinafter referred to as a second processor) of a host computer 11, such as a numeral control unit, for distributing movement commands, detectors (not shown) for detecting actual driving currents flowing through the servomotors, and a servo amplifiers (not shown) which respond to current detector outputs and current commands from the servo circuit 13, to drive the servomotors for the individual axes. Further, the servo system comprises speed detectors (each corresponding to the detector 2 shown in Fig. 1) respectively mounted on the servomotors, a feedback signal register 14 for storing the number of feedback pulses supplied from each of the speed detectors and representing the actual motor rotational position, and each of current detector outputs representing the actual motor currents, and a manual data input device (not shown) for inputting various constants.

With reference to Fig. 4, the torque command deriving process of the servo system will be explained.

When various constants (parameter C, shaft inertia $J_m$ of each servomotor, maximum value $\omega$ cmax of the parameter $\omega c$, matrices A, B and D) required for the sliding mode control and observer processing are inputted via the manual data inputting device before a robot operation is started, these constants are stored into the memory of the servo circuit 13 under the control of the first processor.

During the robot operation, the first processor executes the process shown in Fig. 4 at intervals of the same period as that period at which the second processor periodically executes the movement command distribution.

That is, in each control cycle, the first processor reads out the command motor rotational position written into the shared RAM from the second processor (step 100 in Fig. 4), and reads out the actual servomotor rotational position (position feedback value) from the feedback signal register 14 (step 101). and executes the conventionally known ordinary position loop processing and speed loop processing (step 102). Next, the first processor executes the observer processing, which corresponds to equation (23) and Fig. 2, on the basis of the speed command ($\dot{\theta}m$ in Fig. 2) derived in the position loop processing, and the torque command (T in Fig. 2) derived by the speed loop processing in the preceding control cycle and stored into a built-in register (not shown) of the first processor, to thereby derive the torsion amount $\epsilon$ and torsion speed $\dot{\epsilon}$ (step 103). The first processor substitutes the thus derived values $\epsilon$ and $\dot{\epsilon}$ into equation (4), to determine the switching plane s (step 104). Thereafter, the processor calculates the correction torque T in accordance with equation (14) or (15) depending on the positive or negative sign of the switching plane s - (step 106, 107). Next, the first processor adds the correction torque T derived in the step 106 or 107 to the torque command value derived by the speed loop processing, to thereby determine a corrected torque command value (current command value), and then executes the current loop processing in accordance with the corrected torque command value (step 108).

During the current loop processing, the servo amplifier controls the drive of each of the servomotors in accordance with the command current value and the associated current detector output indicative of the actual current value. At this time, the output torque of each servomotor is controlled in such a manner that the torsion amount $\epsilon$ and torsion speed $\dot{\epsilon}$ are made zero, as described above. As a result, even if the inertia of the robot varies due to variation in the orientation or pose of the robot, the response characteristic of the servo system represented by the constant response function (s = 0) will not be changed. Thus, vibration of the distal end of the robot mechanism section can be prevented or rapidly attenuated. Therefore, the operation of positioning the distal end of the robot mechanism section can be completed in a short period of time, thereby making it possible to reduce the cycle time of the robot operation.

The present invention is not limited to the above embodiment, and can be modified in various manners.

For example, in the above embodiment, the observer is used to detect the torsion amount $\epsilon$ and torsion speed $\dot{\epsilon}$. Alternatively, a second speed detector may be provided on the output side of the speed reducer 3. In this case, the torsion amount $\epsilon$ and torsion speed $\dot{\epsilon}$ are detected on the basis of an output supplied from the speed detector 2 of Fig. 1, which is mounted on the input side of the speed reducer, and indicative of the rotational position $\theta m$ and speed $\dot{\theta}m$ on the input side of the speed reducer, and an output supplied

7

EP 0 441 983 A1

from the second speed reducer and indicative of the rotational position $\theta r$ and speed $\dot{\theta}r$ on the output side of the speed reducer.

## Claims

1. A robot control method for use in a robot having a servomotor for driving a robot mechanism section, comprising the steps of:
   (a) detecting a torsion amount and torsion speed of a distal end of the robot mechanism section respectively corresponding to a rotational position and speed of the servomotor;
   (b) executing sliding mode control processing to derive a control output which causes the torsion amount and the torsion speed to be made zero; and
   (c) driving the servomotor in accordance with the control output.

2. A robot control method according to claim 1, wherein said step (b) includes the steps of:
   (b1) executing speed loop processing to derive a torque command;
   (b2) executing the sliding mode control processing to derive a correction torque for causing the torsion amount and the torsion speed to be made zero; and
   (b3) adding the correction torque to the torque command, to thereby derive a corrected torque command as the control output.

3. A robot control method according to claim 2, wherein said step (c) includes a step of executing current loop processing in accordance with the corrected torque command.

4. A robot control method according to claim 1, wherein said step (a) includes a step of estimating the torsion amount and the torsion speed, by means of an observer which is modeled in accordance with a state equation representative of the robot mechanism section.

5. A robot control method according to claim 1, wherein said method is applied to a robot having a speed reducer disposed between the servomotor and the robot mechanism section, torsion being generated in the speed reducer when the speed reducer rotates; a first detector for generating a first output indicative of a rotational position and speed of the speed reducer on an input side of the speed reducer; and a second detector for generating a second output indicative of a rotational position and speed of the speed reducer on an output side of the speed reducer,
   and wherein said step 8a) includes a step of detecting the torsion amount and the torsion speed in accordance with the first and second outputs.

8

# FIG.1

# FIG.2

$$\begin{pmatrix} X1 \\ X2 \\ X3 \end{pmatrix} = \begin{pmatrix} \dot{\varepsilon} \\ \varepsilon \\ \dot{\theta}m \end{pmatrix}$$

Blocks: T → B; $\dot{\theta}m$ → K; summing junction (+, +, +) → $\frac{1}{S}$ → output; feedback A − KD

# FIG.3

| 11 | 12 | 13 | 14 | 15 |
|---|---|---|---|---|
| HOST CPU | SHARED MEMORY | DIGITAL SERVO CIRCUIT CPU | FEEDBACK SIGNAL REGISTER | ROBOT |

# FIG.4

START

READ COMMAND POSITION VALUE FROM SHARED MEMORY ~100

READ POSITION FEEDBACK VALUE FROM FEEDBACK SIGNAL REGISTER ~101

POSITION AND SPEED LOOP PROCESSING ~102

DERIVE    AND    BY MEANS OF OBSERVER PROCESSING ~103

CALCULATE SWITCHING PLANE S ~104

105

$S \geqq 0$

NO

YES  106

$$T = -\left(\frac{Jm}{C}\right)\left(\omega Cmax^2 + C^2\right) \cdot |\dot{\varepsilon}|$$

107

$$T = \left(\frac{Jm}{C}\right)\left(\omega Cmax^2 + C^2\right) \cdot |\dot{\varepsilon}|$$

ADD CORRECTION TORQUE T TO TORQUE COMMAND VALUE DERIVED BY SPEED LOOP PROCESSING, AND DELIVER SAME TO CURRENT LOOP ~108

END

# INTERNATIONAL SEARCH REPORT

International Application No PCT/JP90/01130

**I. CLASSIFICATION OF SUBJECT MATTER** (if several classification symbols apply, indicate all) [6]

According to International Patent Classification (IPC) or to both National Classification and IPC

Int. Cl$^5$      G05D3/12, G05B19/18, B25J9/00

**II. FIELDS SEARCHED**

| Minimum Documentation Searched [7] | |
|---|---|
| Classification System | Classification Symbols |
| IPC | G05D3/12, G05B19/18, B25J9/00 |

| Documentation Searched other than Minimum Documentation to the Extent that such Documents are Included in the Fields Searched [8] |
|---|
| Jitsuyo Shinan Koho        1961 - 1990 |
| Kokai Jitsuyo Shinan Koho    1970 - 1990 |

**III. DOCUMENTS CONSIDERED TO BE RELEVANT** [9]

| Category* | Citation of Document,[11] with indication, where appropriate, of the relevant passages [12] | Relevant to Claim No.[13] |
|---|---|---|
| A | JP, A, 61-255415 (Kawasaki Heavy Industries, Ltd.), 13 November 1986 (13. 11. 86), Line 2, upper right column to line 16, lower left column, page 2 (Family: none) | 1 - 5 |
| A | JP, A, 63-181011 (Toshiba Corp.), 26 July 1988 (26. 07. 88), Line 14, right column, page 1 to line 12, upper right column, page 2 (Family: none) | 1 - 5 |
| A | JP, A, 1-140310 (Daikin Industries, Ltd.), 1 June 1989 (01. 06. 89), Line 13, right column, page 1 to line 3, lower left column, page 2 (Family: none) | 1 - 5 |
| A | JP, A, 1-195516 (Nitto Seiko K.K.), 7 August 1989 (07. 08. 89), Line 1, lower left column, page 2 to | 1 - 5 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| November 14, 1990 (14. 11. 90) | December 3, 1990 (03. 12. 90) |
| International Searching Authority | Signature of Authorized Officer |
| Japanese Patent Office | |

Form PCT/ISA/210 (second sheet) (January 1985)

| FURTHER INFORMATION CONTINUED FROM THE SECOND SHEET |
|---|

line 4, upper right column, page 3
(Family: none)

---

**V.☐ OBSERVATIONS WHERE CERTAIN CLAIMS WERE FOUND UNSEARCHABLE [1]**

This international search report has not been established in respect of certain claims under Article 17(2) (a) for the following reasons:

1.☐ Claim numbers     , because they relate to subject matter not required to be searched by this Authority, namely:

2.☐ Claim numbers     , because they relate to parts of the international application that do not comply with the prescribed requirements to such an extent that no meaningful international search can be carried out, specifically:

3.☐ Claim numbers     , because they are dependent claims and are not drafted in accordance with the second and third sentences of PCT Rule 6.4(a).

---

**VI.☐ OBSERVATIONS WHERE UNITY OF INVENTION IS LACKING [2]**

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

  ☐ The additional search fees were accompanied by applicant's protest.

  ☐ No protest accompanied the payment of additional search fees.

Form PCT/ISA/210 (supplemental sheet (2)) (January 1985)